# DEMANDE DE BREVET EUROPEEN

(11) **EP 3 840 391 A1**
(43) Date de publication de la demande: **23.06.2021**
(21) Numéro de dépôt: 20208757.3
(22) Date de dépôt: 19.11.2020
(51) Int. Cl.: H04N 21/24, H04N 21/2743, H04N 21/431, H04N 21/436

(54) **GESTION DE LA RESTITUTION D'UN CONTENU MULTIMÉDIA ET D'UNE INTERFACE DE NAVIGATION SUR UN ÉCRAN**

(30) Priorité: 18.12.2019 FR 1914723
(71) Demandeur: ORANGE, 75015 Paris (FR)
(72) Inventeur: MARCHAND, Hervé, 92326 Châtillon (FR); GASTE, Olivier, 92326 Châtillon (FR); RIVOALEN, Mathieu, 92326 Châtillon (CO)

(57) **Abrégé**

L'invention se rapporte à un procédé de gestion du téléchargement, dans un terminal lecteur (CLTV), d'un contenu télévisuel, dit contenu principal, et d'une interface de navigation concomitamment depuis un réseau de télécommunications (WAN), l'interface de navigation incluant des zones incluant des contenus représentatifs de contenus télévisuels en temps réel disponibles à la sélection, dits contenus secondaires, , caractérisé en ce qu'il comprend les étapes suivantes dans le terminal lecteur de flux multimédia :
a. une étape de réception d'une commande d'affichage de l'interface de navigation,
b. une étape de transmission d'une requête d'accès à des contenus secondaires de l'interface, la requête incluant une donnée représentative d'un type de contenus secondaires à télécharger, le type d'image choisi prenant en compte une donnée liée au téléchargement du contenu principal.

## Description

### Domaine technique

Le domaine de l'invention est celui de la diffusion de contenus multimédia numériques, à savoir les contenus audio et/ou vidéo numériques. Plus précisément, l'invention concerne la restitution d'un contenu du type interface de navigation concomitamment avec la restitution d'un contenu téléchargé via un réseau de télécommunication. L'invention vise tout particulièrement les contenus téléchargés selon une technique dite de téléchargement progressif adaptatif, ou HAS, ou toutes autres techniques de téléchargement utilisant le même principe.

L'invention s'applique à tout dispositif capable de restituer à la fois des contenus vidéos en HAS et une interface de navigation. Ces dispositifs sont par exemple une clé TV, une Web TV, une télévision Connectée, un décodeur de télévision numérique, etc.

### Art antérieur

L'accès à un contenu multimédia, tel que la télévision ou la vidéo à la demande, depuis un réseau de type Internet, est possible aujourd'hui, pour la plupart des terminaux de restitution, notamment lorsqu'ils appartiennent à un réseau de communication local, tel qu'un réseau domestique.

Le terminal émet généralement une requête à destination d'un serveur, en indiquant le contenu choisi, ci-après appelé contenu principal ; le terminal reçoit en retour un flux de données numériques relatives à ce contenu. Dans le cadre d'un réseau de communication local, une telle requête transite par la passerelle d'accès au réseau, par exemple la passerelle résidentielle.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation sur l'écran du terminal.

La diffusion de contenus numériques sur Internet est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée. Le terminal reçoit et stocke une partie des données numériques dans une mémoire tampon avant de les restituer. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et recevoir des données suivant différentes qualités correspondant par exemple à différents débits. Ces différentes qualités sont décrites dans un fichier de description, appelé « manifest » par l'homme du métier, disponible en téléchargement sur un serveur de données, par exemple un serveur de contenus. Quand le terminal client souhaite accéder à un contenu, ce fichier de description permet de sélectionner le bon format pour le contenu à consommer en fonction de la bande passante disponible ou des capacités de stockage et de décodage du terminal client. Ce type de technique permet notamment de tenir compte des variations de bande passante sur la liaison entre le terminal client et le serveur de contenus.

Il existe plusieurs solutions techniques pour faciliter la distribution d'un tel contenu en streaming, comme par exemple les solutions propriétaires Microsoft® Smooth Streaming, Apple® HLS, Adobe® HTTP Dynamic Streaming ou encore la norme MPEG-DASH de l'organisme ISO/IEC qui sera décrite ci-après. Ces méthodes proposent d'adresser au client un ou plusieurs fichiers de description intermédiaires, appelés aussi documents ou « manifests », contenant les adresses des différents segments aux différentes qualités du contenu multimédia.

Ainsi, la norme MPEG-DASH (pour l'anglais "Dynamic Adaptive Streaming over HTTP", en français « diffusion en flux adaptatif dynamique sur HTTP ») est un standard de format de diffusion audiovisuelle sur Internet. Il se base sur la préparation du contenu en différentes présentations de qualité et débit variables, découpées en segments de courte durée (de l'ordre de quelques secondes), également appelés « chunks ». Chacun de ces segments est rendu disponible individuellement au moyen d'un protocole d'échange. Le protocole principalement ciblé est le protocole HTTP, mais d'autres protocoles (par exemple FTP) peuvent également être utilisés. L'organisation des segments et les paramètres associés sont publiés dans un manifest au format XML.

Le principe sous-jacent à cette norme est que le terminal client MPEG-DASH effectue une estimation de la bande passante disponible pour la réception des segments, et, en fonction du remplissage de son tampon de réception, choisit, pour le prochain segment à charger, une représentation dont le débit assure la meilleure qualité possible, et permet un délai de réception compatible avec le rendu ininterrompu du contenu.

Ainsi, pour s'adapter à la variation des conditions réseau, notamment en termes de bande passante, les solutions existantes de téléchargement adaptatif permettent au terminal client de passer d'une version du contenu encodée à un certain débit d'encodage, à une autre encodée à un autre débit, au cours du téléchargement. En effet, chaque version du contenu est divisée en segments de même durée. Pour permettre une restitution en continu du contenu sur le terminal, chaque segment doit atteindre le terminal avant son instant programmé de restitution. La qualité perçue associée à un segment augmente avec la taille du segment, exprimée en bits, mais dans le même temps, des segments plus gros requièrent un temps de transmission plus important, et donc présentent un risque accru de ne pas être reçus à temps pour une restitution en continu du contenu.

Le terminal de restitution doit donc trouver un compromis entre la qualité globale du contenu, et sa restitution ininterrompue, en sélectionnant avec soin le prochain segment à télécharger, parmi les différents débits d'encodage proposés. Il existe pour ce faire différents algorithmes de sélection de la qualité du contenu en fonction de la bande passante disponible, qui peuvent présenter des stratégies plus ou moins agressives, ou plus ou moins sécuritaires.

La consommation de contenus numériques en téléchargement progressif adaptatif (HAS) tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande (VOD), la diffusion en différé de programmes télévisuels (Replay), ou encore les offres de type Network PVR (pour « Network Personal Video Recorder », i.e. un service d'enregistrement des contenus numériques, effectué par le fournisseur de contenus lui-même plutôt qu'au domicile de l'utilisateur final).

En outre, d'autres dispositifs tels que des appareils lecteurs de flux multimédia en temps réel accèdent également aux contenus numériques en mode de téléchargement adaptatif progressif pour des contenus télévisuels en temps réel (ou Live). C'est le cas par exemple de l'appareil appelé CléTV® d'Orange®.

Un tel appareil se branche classiquement sur le port HDMI d'un téléviseur et communique, par connexion Wi-Fi®, avec un autre appareil du réseau de communication domestique connecté à un réseau de communication étendu de type Internet (passerelle résidentielle, ordinateur, téléphone intelligent de type smartphone, tablette...), afin de restituer, sur le téléviseur, le contenu multimédia reçu par une application logicielle compatible. On désignera par la suite ces appareils sous la désignation générique de Clef HDMI.

La qualité de la vidéo fournie au terminal client va donc s'adapter en permanence aux contraintes de son débit d'accès et rentre en concurrence avec tous les autres services qui consomment de la bande passante notamment les interfaces de navigation. Une interface de navigation met en avant des contenus sélectionnables, et offre un accès à différentes chaines de télévision en directe à travers une liste de contenus appelée VZL (Virtual Zapping List). L'interface de navigation en question peut être affichée concomitamment avec un contenu multimédia, dit contenu principal, en cours de diffusion et téléchargé en mode HAS.

Les contenus disponibles à la sélection dans la liste VZL sont souvent associés à un contenu multimédia, dit contenu secondaire. Un contenu secondaire est souvent une image mais peut très bien être une vidéo. L'affichage de l'interface nécessite de récupérer des images représentatives de contenus télévisuels disponibles à la sélection sur des serveurs. De plus, ces images sont récupérées régulièrement car elles évoluent en fonction des contenus télévisuels en direct qui sont diffusés. Pour offrir une qualité de service optimale, ces images doivent avoir une qualité suffisamment élevée de façon à avoir une interface affichée à l'écran agréable à regarder pour un utilisateur. Cependant, le téléchargement de ces images et leurs éventuelles mises à jour consomment beaucoup de bande passante et impose parfois le terminal client à réduire le débit des segments demandés pour le contenu principal en cours de restitution. Il résulte des différents téléchargements concomitants une diminution de la qualité de restitution du contenu principal.

L'invention vient améliorer la situation.

L'invention se rapporte à un procédé de gestion du téléchargement, dans un terminal lecteur, d'un contenu télévisuel, dit contenu principal, et d'une interface de navigation concomitamment depuis un réseau de télécommunications, l'interface de navigation comprenant des zones incluant des contenus représentatifs de contenus télévisuels en temps réel disponibles à la sélection, dits contenus secondaires, , caractérisé en ce qu'il comprend les étapes suivantes dans le terminal lecteur de flux multimédia :
- une étape de réception d'une commande d'affichage de l'interface de navigation,
- une étape de transmission d'une requête d'accès à des contenus secondaires de l'interface, la requête incluant une donnée représentative d'un type de contenus secondaires à télécharger, le type choisi prenant en compte une donnée liée au téléchargement du contenu principal.

Selon l'invention, la gestion de l'accès simultané à deux types de contenus, à savoir un contenu télévisé et une interface de navigation incluant des contenus, s'effectue en faisant varier judicieusement les débits d'encodage des deux types de contenu en fonction de la qualité souhaitée pour l'un ou pour l'autre des contenus voire pour l'ensemble incluant le contenu principale et l'interface de navigation. On peut par exemple souhaiter privilégier le contenu télévisé par rapport à l'interface de navigation ou inversement.

Pour réaliser cet objectif, le module de téléchargement d'images a pour fonction de requérir un accès aux contenus secondaires en spécifiant une valeur particulière représentative d'une qualité d'images, cette valeur étant choisie de manière à offrir une qualité de restitution de l'interface de navigation et/ou du flux télévisé.

On verra ci-dessous que la qualité souhaitée est fonction du cas d'espèce ; une qualité de restitution du contenu téléchargé peut être privilégiée par rapport aux images restituées dans l'interface de navigation ; ou inversement. Si la qualité souhaitée de restitution du contenu téléchargé est une qualité optimale ; une diminution de la qualité des images permet d'augmenter la bande passante allouée au contenu principal en cours de téléchargement et donc la qualité de restitution du contenu principal.

Selon un premier mode de mise en œuvre particulier de l'invention, le contenu principal est téléchargé sous forme de fragments ayant des débits d'encodage variables dans le temps. Dans cette configuration, la donnée liée au téléchargement du contenu principal est une valeur du débit d'encodage utilisé pour le téléchargement. Ce premier mode utilise une valeur de débit d'encodage disponible dans le terminal de restitution et a donc pour avantage de ne pas nécessiter de calcul particulier.

Selon encore un deuxième mode de mise en œuvre particulier de l'invention, qui pourra être mis en œuvre alternativement ou cumulativement avec le précédent mode, la donnée comprend en outre une valeur seuil de débit d'encodage à ne pas franchir pour le téléchargement du contenu principal. Ce mode assure une restitution du contenu principal avec une qualité au moins égale au débit d'encodage seuil prédéfini.

Selon encore un troisième mode de mise en œuvre particulier de l'invention, qui pourra être mis en œuvre alternativement ou cumulativement avec les précédents, la donnée liée au téléchargement du contenu principal est un une valeur représentative du type de réseau de communication utilisé pour télécharger du contenu principal. Dans ce troisième mode, le type d'image sera fonction du support de transmission du réseau ; par exemple si le réseau est un réseau fibre, ADSL, etc.

On verra que les téléchargements du contenu principal et des contenus secondaires sont gérés par des modules de téléchargement respectifs. Selon encore un quatrième mode de mise en œuvre particulier de l'invention, qui pourra être mis en œuvre alternativement ou cumulativement avec les précédents, au type d'image à utiliser correspond un débit d'encodage. Ce quatrième mode applique au téléchargement d'images le principe du téléchargement en mode HAS. Les module de téléchargement peuvent donc être mutualisés ; en d'autres mots, les modules de téléchargement ne font qu'un.

Selon encore un cinquième mode de mise en œuvre particulier de l'invention, qui pourra être mis en œuvre alternativement ou cumulativement avec les précédents, la donnée liée au téléchargement du contenu principal est un débit d'encodage d'une valeur choisie de telle manière que la somme du débit d'encodage demandé pour les contenus secondaires et du débit d'encodage courant utilisé pour le contenu principal est inférieure à une valeur de débit d'encodage maximum donné. Ce cinquième mode assure que le service englobant la restitution d'un contenu principal et la restitution d'une interface de navigation n'excède pas un débit d'encodage donné afin d'offrir une bande passante acceptable aux autres services en cours d'exécution au niveau du terminal lecteur ou susceptibles d'être exécutés.

Selon un aspect matériel, l'invention se rapporte à une entité de gestion du téléchargement dans un terminal lecteur d'un contenu télévisuel, dit contenu principal, et d'une interface de navigation concomitamment depuis un réseau de télécommunications, l'une interface de navigation comprenant des zones incluant des contenus représentatives de contenus télévisuels en temps réel disponibles à la sélection, dits contenus secondaires, le contenu télévisuel étant téléchargés sous forme de fragments ayant des débits d'encodage variables dans le temps, caractérisé en ce qu'il comprend:
- un module de réception d'une commande d'affichage de l'interface de navigation,
- un module de transmission d'une requête d'accès à des contenus secondaires de l'interface, la requête incluant une donnée représentative d'un type d'image à utiliser pour la transmission des contenus secondaires, le type choisi prenant en compte une donnée liée au téléchargement du contenu principal.

Selon un autre aspect matériel, l'invention se rapporte à un terminal lecteur comprenant une entité de gestion telle que définie ci-dessus.

Selon un autre aspect matériel, l'invention a pour objet un programme d'ordinateur apte à être mis en œuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Le support en question peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
La figure 1 représente une architecture de téléchargement progressif sur Internet basée sur l'utilisation du streaming adaptatif selon l'invention ;
La figure 2 illustre de façon schématique la structure matérielle d'un terminal lecteur de flux multimédia en temps réel intégrant un dispositif de gestion de téléchargement progressif adaptatif selon un mode de réalisation de l'invention;
La figure 3 présente les principaux éléments du système ainsi qu'une vue schématique des différents segments d'un contenu principal ;
La figure 4 est un exemple de restitution d'un contenu télévisé concomitamment avec une interface de navigation ;
La figure 5 présente l'évolution du débit d'encodage utilisé pour le contenu principal selon l'état de la technique ;
La figure 6 présente l'évolution du débit d'encodage utilisé pour le contenu principal selon un mode de réalisation du procédé de l'invention.

### Description détaillée de modes de réalisation de l'invention

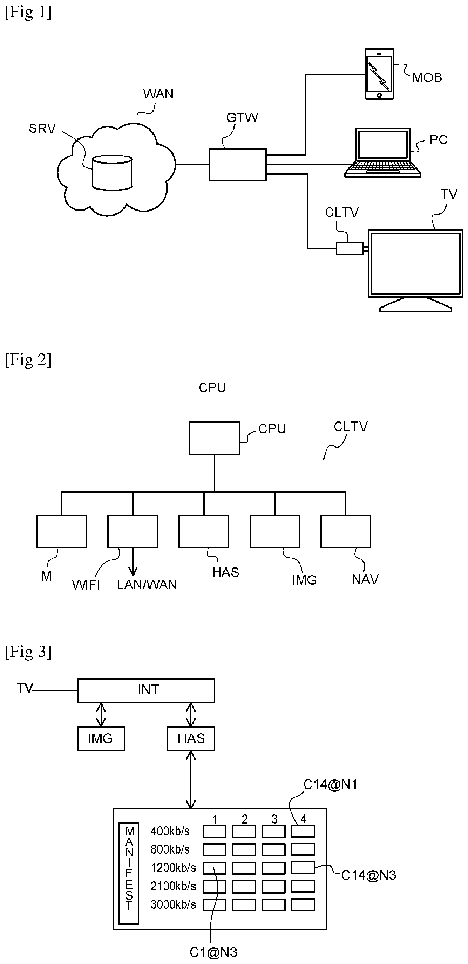

On présente désormais, en relation avec la figure 1, une architecture de téléchargement progressif basée sur l'utilisation du streaming adaptatif HAS selon un mode de réalisation de l'invention. Précisons à nouveau ici que l'invention ne se limite pas à la technologie HAS mais s'étend à toutes autres technologies de téléchargement de données.

Le Terminal MOB, par exemple un téléphone intelligent de type « smartphone », le Terminal PC, par exemple un ordinateur portable, et le Terminal CLTV, par exemple une clef HDMI connectée à un téléviseur TV, se trouvent dans cet exemple situé dans un réseau local LAN piloté par une passerelle domestique GTW. Le contexte du réseau local est donné à titre d'exemple et pourrait être transposé aisément à un réseau Internet de type « best effort », un réseau d'entreprise, etc.

Un serveur de contenus numériques SRV se trouve selon cet exemple dans le réseau étendu WAN mais il pourrait indifféremment être situé dans le réseau local LAN, par exemple dans la passerelle domestique GTW ou tout autre équipement capable d'héberger un tel serveur de contenus. Le serveur de contenus SRV reçoit par exemple des chaînes de contenus de télévision numérique en provenance d'un réseau de télévision diffusée, non représenté, et/ou des vidéos à la demande, et les met à disposition des terminaux clients.

Les terminaux clients MOB, PC, CLTV peuvent entrer en communication avec le serveur de contenus SRV pour recevoir un ou plusieurs contenus (films, documentaires, séquences publicitaires, etc.).

Il est fréquent, dans ce contexte client-serveur, de recourir, pour échanger les données entre les terminaux client MOB, PC, CLTV et le serveur SRV, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client MOB, PC, CLTV et la passerelle de services GTW, et/ou entre cette dernière et le serveur de contenus SRV.

Classiquement, comme on le verra en référence à la figure 3, différentes qualités peuvent être encodées pour le même contenu d'une chaîne, correspondant par exemple à différents débits. Plus généralement, on parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels (ou « fragments » de contenu, en anglais « chunks », ces trois mots étant utilisés indifféremment dans l'ensemble de ce document).

La description de ces différentes qualités et de la segmentation temporelle associée, ainsi que les fragments de contenu, sont décrits pour le terminal client et mis à sa disposition via leurs adresses Internet (URI : Universal Ressource Identifier).

L'ensemble de ces paramètres (qualités, adresses des fragments, etc.) est en général regroupé dans un fichier de paramètres, dit fichier de description ou « manifest ». On notera que ce fichier de paramètres peut être un fichier informatique ou un ensemble d'informations descriptives du contenu, accessible à une certaine adresse.

Les terminaux MOB, PC, et CLTV possèdent leurs propres caractéristiques en termes de capacité de décodage, d'affichage, etc. Dans un contexte de téléchargement adaptatif progressif, ils peuvent adapter leurs requêtes pour recevoir et décoder le contenu demandé par l'utilisateur à la qualité qui leur correspond au mieux. Dans notre exemple, si les contenus sont disponibles aux débits 512 kb/s (kilobits par seconde) (Résolution 1, ou niveau 1, noté N1), 1024 kb/s (N2), 2048 kb/s (N3) et que le terminal client dispose d'une bande passante de 3000 kb/s, il peut demander le contenu à n'importe quel débit inférieur à cette limite, par exemple 2048 kb/s. De manière générale, on note « Ci@Nj » le contenu numéro i avec la qualité j (par exemple le j-ième niveau Nj de qualité décrit dans le fichier de description).

La passerelle de service GTW est dans cet exemple une passerelle domestique qui assure le routage des données entre le réseau étendu WAN et le réseau local LAN, gère les contenus numériques en assurant notamment leur réception en provenance du réseau et leur décodage grâce aux décodeurs que l'on suppose ici intégrés à la passerelle GTW ou aux terminaux clients MOB, PC ou CLTV. En variante, les décodeurs peuvent se trouver ailleurs dans le réseau étendu WAN ou local LAN, notamment au niveau d'un élément de type STB (de l'anglais Set-Top-Box) (non représenté) associé à un téléviseur.

Dans cet exemple, pour visualiser un contenu, le Terminal MOB, PC ou CLTV interroge tout d'abord la passerelle de service GTW pour obtenir une adresse du fichier de description MNF du contenu (par exemple, C1) souhaité. La passerelle de service GTW répond en fournissant au terminal l'adresse du fichier de description MNF. Dans la suite, on supposera que ce fichier est un fichier de type manifest selon la norme MPEG-DASH (noté « C.mpd ») et on se réfèrera indifféremment, selon le contexte, à l'expression « fichier de description » ou « manifest».

Alternativement, ce fichier peut être récupéré directement auprès d'un serveur Internet local ou externe au réseau local, ou se trouver déjà sur la passerelle de service ou sur le terminal au moment de la requête.

Un exemple de fichier manifest (MPD) conforme à la norme MPEG-DASH et comportant la description de contenus disponibles dans trois qualités différentes (N1 = 512 kb/s, N2 = 1024 kb/s, N3 = 2048 kb/s) des contenus fragmentés est présenté en annexe 1. Ce fichier manifest simplifié décrit des contenus numériques dans une syntaxe XML (de l'Anglais « eXtended Markup Language»), comprenant une liste de contenus sous forme de fragments classiquement décrits entre une balise ouvrante (<SegmentList>) et une balise fermante (</SegmentList>). La découpe en fragments permet notamment de s'adapter finement aux fluctuations de la bande passante. Chaque fragment correspond à une certaine durée (champ « duration ») avec plusieurs niveaux de qualité et permet de générer leurs adresses (URL - Uniform Resource Locator). Cette génération est faite dans cet exemple à l'aide des éléments « BaseURL » (« HTTP://server.com») qui indique l'adresse du serveur de contenus et « SegmentURL » qui liste les parties complémentaires des adresses des différents fragments :
- « C1_512kb_1.mp4 » pour le premier fragment du contenu « C1 » à 512 kilobits par seconde (« kb ») au format MPEG-4 (« mp4 »),
- « C1_512kb_2.mp4 » pour le second fragment,
- etc.

Une fois qu'elle dispose des adresses de fragments correspondant au contenu souhaité, la passerelle de service GTW procède à l'obtention des fragments via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

On s'intéresse maintenant à un seul terminal client, par exemple la clef CLTV qui est connectée au téléviseur TV par branchement sur le port HDMI de ce dernier. Le principe de l'invention pourrait bien évidemment être mis en œuvre sur les terminaux PC ou MOB.

La clef CLTV est utilisée pour restituer, sur l'écran du téléviseur TV, un programme télévisuel. Par la suite, on désigne ce programme télévisuel sous le nom de contenu C1. Un tel contenu C1 est décrit dans un fichier manifest MNF.

En variante, on notera que le contenu C1 peut être un programme télévisuel diffusé en différé, ou une vidéo à la demande, ou une vidéo personnelle de l'utilisateur, ou tout autre contenu multimédia de durée déterminée, pour laquelle l'invention s'applique également.

La clef CLTV peut être pilotée par l'utilisateur au moyen du téléphone intelligent MOB, sur lequel est installée une application logicielle de télécommande de la clef CLTV.

Les fragments de contenu obtenus par la passerelle résidentielle GTW sont par exemple transmis en WiFi® à la clef CLTV, qui pilote leur affichage sur l'écran du téléviseur TV, pour restitution à l'utilisateur.

La figure 2 représente une architecture d'une clé CLTV selon un mode de réalisation de l'invention.

La clé CLTV comprend, classiquement, des mémoires M associées à un processeur CPU. Les mémoires peuvent être de type ROM (de l'anglais « Read Only Memory ») ou RAM (de l'anglais « Random Access Memory ») ou encore Flash. La clef CLTV communique avec le réseau local LAN et le réseau Internet étendu WAN via le module WIFI pour une communication locale sans fils avec la passerelle résidentielle GTW ou un autre terminal de communication du réseau local LAN, par exemple le téléphone intelligent 3. La clef CLTV comprend en outre un module de téléchargement progressif adaptatif HAS apte à demander un téléchargement progressif de l'un des contenus à l'une des qualités proposées dans un fichier de description MNF. Ce fichier de description MNF peut être enregistré par exemple dans les mémoires M de la clef CLTV ou se trouver à l'extérieur.

La clé CLTV est connectée à un téléviseur TV, par l'intermédiaire d'une liaison HDMI.

La clé CLTV comprend en outre un module de téléchargement de contenus secondaires IMG décrit ci-dessous et un module de téléchargement HAS pour gérer le téléchargement des contenus en mode HAS.

La clef CLTV peut aussi contenir d'autres modules comme un disque dur non représenté pour le stockage des fragments vidéo, un module de contrôle d'accès aux contenus, un module de traitement des commandes reçues du smartphone.

On présente désormais, en relation avec la figure 3, les éléments principaux d'une clé CLTV et une vue schématique d'un contenu principal C1 stocké dans le serveur de contenus SRV sous forme de segments. Plus précisément, le serveur de contenu HAS expose une vidéo C1 sous forme de « chunks » Cli@Nj encodés à différents débits d'encodage Nj, où l'indice i désigne un identifiant temporel du « chunk » Cli@Nj.

Selon l'art antérieur, le module de téléchargement HAS de la clé CLTV est chargé de venir récupérer ses « chunks » auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain fragment vidéo à télécharger : il existe en effet de nombreux algorithmes permettant d'opérer ce choix, dont les stratégies sont plus ou moins sécuritaires ou agressives. On rappelle cependant que, le plus souvent, le principe général de tels algorithmes repose sur le téléchargement d'un premier fragment au débit d'encodage le plus faible proposé dans le fichier manifest, et sur l'évaluation du temps de récupération de ce premier fragment. Sur cette base, le module de téléchargement HAS évalue si, en fonction de la taille du fragment et du temps mis pour le récupérer, les conditions réseau permettent de télécharger le fragment suivant à un débit d'encodage plus élevé. Certains algorithmes reposent sur une augmentation progressive du niveau de qualité des fragments de contenu téléchargés ; d'autres proposent des approches plus risquées, avec des sauts dans les niveaux des débits d'encodage des fragments successifs.

Dans le cas classique, si un « chunk » vidéo dure 3 secondes, la récupération du « chunk » par le module de téléchargement HAS ne doit pas excéder 3 secondes, afin de permettre une restitution sans interruption du contenu par la clé CLTV. Il convient donc pour le module de téléchargement HAS d'opérer le meilleur compromis entre une qualité de restitution, et donc un débit d'encodage, aussi élevés que possible, et le temps de téléchargement du fragment, qui doit être suffisamment faible pour permettre une restitution en continu sur le téléviseur TV.

Dans le mode de réalisation illustré en figure 3, le module de téléchargement HAS commande le téléchargement d'un fragment au débit d'encodage optimal comme décrit plus en détail par la suite.

Dans un premier temps, le module HAS récupère le fichier manifest MNF qui correspond au contenu vidéo C1 afin de découvrir les fragments disponibles du contenu vidéo C1, et les différentes qualités vidéo Nj associées. Dans l'exemple de la figure 3, le contenu C1 est par exemple proposé sous forme de fragments de durée 3s, avec un premier débit d'encodage N1 = 500 kb/s, un deuxième débit d'encodage N2 = 2000 kb/s, un troisième débit d'encodage N3 = 2000 kb/s, etc.

Dans un mode de fonctionnement normal, non illustré sur la figure 3, le module HAS opère le téléchargement par exemple, des fragments successifs C11@N1 (soit le premier fragment temporel à un débit d'encodage de 500 kb/s), puis C12@N3 (soit le deuxième fragment temporel à un débit d'encodage de 2000 kb/s), puis C13@N3 (soit le troisième fragment temporel à un débit d'encodage de 2000 kb/s), etc.

Les différents fragments téléchargés par le module de téléchargement HAS sont transmis à un module d'interface INT pour leur restitution à l'utilisateur sur l'écran du téléviseur TV. Le module INT gère de l'interface avec le téléviseur TV, par lequel elle obtient par exemple des informations sur les éventuelles interactions de l'utilisateur avec le téléviseur TV (action sur la télécommande du téléviseur par exemple par appui sur la touche volume ou une touche de changement de canal), et par lequel elle peut piloter l'affichage sur l'écran du téléviseur TV d'un contenu demandé, par exemple une chaîne de télévision ou une interface de navigation concomitamment.

L'algorithme mis en œuvre par le module de téléchargement HAS pour déterminer quel fragment à quel débit d'encodage doit être téléchargé en mode de fonctionnement normal peut être l'un des algorithmes déjà existants de l'art antérieur. Cet algorithme ne sera donc pas décrit ici plus en détail.

Comme indiqué précédemment, une interface de navigation est accessible et peut être restituée en même temps que le contenu vidéo C1 sur l'écran. L'interface de navigation INT comprend des contenus secondaires aptes à être téléchargés en vue de leurs restitutions respectives sur l'écran.

D'autres téléchargements que le contenu vidéo C1, dit contenu principal, et des contenus secondaires peuvent avoir lieu concomitamment. Cependant, pour simplifier l'exposé de l'invention, on fera l'hypothèse que les seuls services utilisés sont le téléchargement du contenu principal, par le module de téléchargement HAS, et le téléchargement des contenus secondaires, dans notre exemple des images, par le module de téléchargement d'image IMG.

Dans notre exemple de réalisation, le contenu principal C1 est un contenu télévisé.

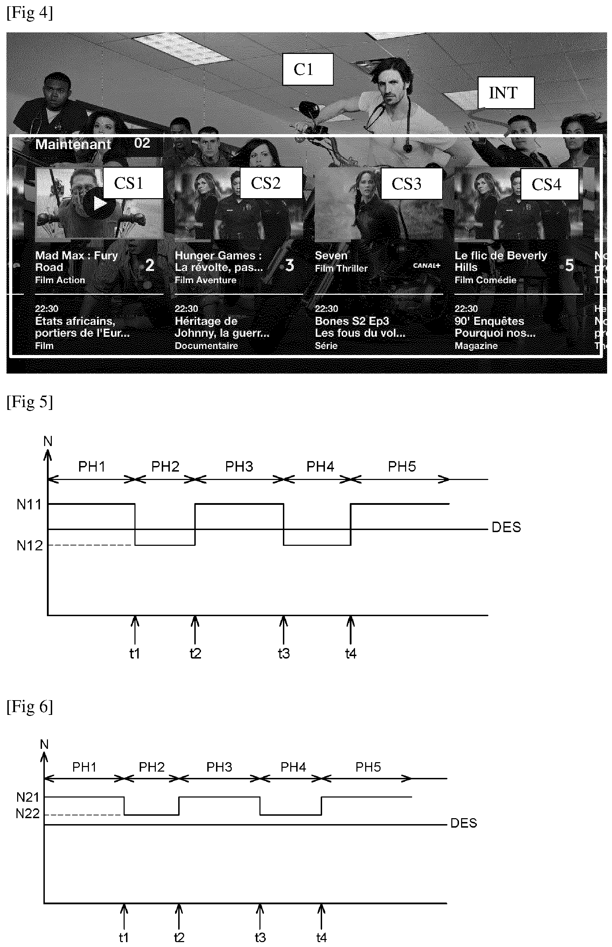

La figure 4 illustre un écran ECR affichant concomitamment un contenu principal C1 et une interface de navigation NAV.

L'interface NAV comprend dans notre exemple quatre zones associées respectivement à quatre contenus secondaires CS1-CS4 disponibles à la sélection. En d'autres termes, un utilisateur peut zapper du contenu principal C1 vers un contenu secondaire en sélectionnant un des contenus secondaires, par exemple à l'aide d'une télécommande.

Un contenu secondaire peut être indifféremment une image, une suite d'images, ou un extrait vidéo du contenu.

Dans notre exemple, les contenus secondaires CS1-CS4 sont des images représentatives de contenus aptes à être sélectionnés et à être restitués en tant que contenu principal. L'image est a plupart du temps en rapport avec le contenu proposé. Si une chaîne de télévision diffuse un dessin animé, l'image associée dans l'interface de navigation est par exemple une image d'une scène du dessin animé.

Sur la figure 4, le_contenu affiché inclut un contenu télévisé C1 en arrière-plan et l'interface de navigation INT au premier plan. L'interface INT comprend un menu déroulant (non représenté) permettant d'accéder à d'autres chaînes de télévision que celles qui sont affichées. Des images CS1-CS4 sont associées aux chaînes de télévision accessibles depuis l'interface.

La figure 5 illustre l'évolution de débit d'encodage sélectionné par le module de téléchargement HAS en fonction du temps selon l'état de la technique.

Lors d'une première phase PH1, le module de téléchargement HAS sélectionne pour le contenu principal C1 un premier débit N1 et reçoit des segments avec ce débit d'encodage N1.

Lors d'une deuxième phase qui débute à un instant t1, un utilisateur requiert l'affichage de l'interface de navigation INT.

Suite à la demande d'accès à l'interface INT, une requête d'accès aux images CS1-CS4 est transmise à destination du serveur SRV via le réseau. Du fait de la diminution de la bande passante liée à la réception des images de l'interface, le module de téléchargement HAS diminue le débit d'encodage pour les segments à venir de la valeur N11 à la valeur N12. La valeur de débit obtenue N12 est maintenue pendant toute une deuxième phase PH2 qui correspond à la durée de téléchargement des images à savoir de l'instant t1 à t2.

Une fois les images de l'interface téléchargée, la bande passante augmente de nouveau et le client HAS adapte de nouveau le débit d'encodage pour les segments à télécharger. Le module HAS sélectionne de nouveau le débit N12 et le maintien pendant une troisième phase PH3 qui prend fin à l'instant t3 correspondant à un instant de mise à jour de tout ou partie des images. Dans notre exemple, ces mises à jour ont lieu périodiquement.

Comme pour la deuxième phase PH2, une quatrième phase PH4 succède à la troisième phase PH3 au cours de laquelle, du fait de la diminution de la bande passante liée à la réception des mises à jour des images de l'interface, le module de téléchargement HAS diminue de X kb/s. La valeur de débit obtenue N12 est maintenue pendant toute cette quatrième phase PH4 qui correspond à la durée de téléchargement des mises à jour des images à savoir de l'instant t3 à t4.

On constate néanmoins un problème lorsqu'une qualité d'image donnée est souhaitée pour la restitution du contenu principal C1. Dans ce cas, le module HAS souhaite ne doit pas sélectionner un débit d'encodage inférieur à un débit d'encodage seuil DES. Pour résoudre ce problème, selon l'invention, la requête d'accès à l'interface de navigation comprend une donnée représentative d'un type d'image à télécharger, le type d'image choisi prenant en compte une donnée liée au téléchargement du contenu principal. La donnée liée au téléchargement du contenu principal est par exemple une valeur du débit d'encodage utilisé pour le téléchargement. La donnée peut également être complétée par une valeur seuil de débit d'encodage DEs à ne pas franchir pour le téléchargement du contenu principal C1 de manière à assurer une qualité d'images donnée. Par exemple, le débit d'encodage seuil DEs peut être fixé à 1024 Kb/s. Dans cette configuration, le module de téléchargement IMG peut requérir une qualité d'image donnée choisie parmi plusieurs qualités d'images de manière à respecter le débit d'encodage seuil fixé par le client de téléchargement HAS. Ce mode de réalisation de l'invention est décrit en référence à la figure 6.

Cette figure 6 comporte les mêmes phases que celles décrites en référence à la figure 5 à la différence que la qualité d'images demandée par le module de téléchargement d'images IMG varie dans le temps. Dans notre exemple, les images demandées par le module de téléchargement IMG ont une qualité inférieure à l'exemple précédent et occupe de ce fait moins de bande passante, ce en faveur du contenu télévisé C1 qui dispose en conséquence de plus de bande passante et peut donc requérir un débit d'encodage N22 supérieur à N21 et surtout supérieur au débit seuil DEs. En d'autres mots, le débit N22 demandé par le client de téléchargement HAS est un débit intermédiaire entre le débit N11 et le débit DEs.

Il convient de préciser ici que l'invention ne se limite bien évidement pas à deux qualités d'images mais s'étend à un nombre supérieur de qualité d'images.

Selon une variante, la donnée liée au téléchargement du contenu principal est un débit d'encodage d'une valeur choisie de telle manière que la somme du débit d'encodage demandé pour les contenus secondaires et du débit d'encodage courant utilisé pour le contenu principal est inférieure à une valeur de débit d'encodage maximum donné. Cette variante est intéressante lorsque la restitution d'un contenu principal et l'interface de navigation font partie d'un même service et qu'un souhait est de ne pas dépasser une bande passante donnée et donc offrir un débit d'accès confortable aux autres services pouvant être exécutés au même moment sur la clé CLTV.

Pour illustrer l'exemple décrit en référence avec la figure 6, considérons par exemple que la bande passante d'accès courante au réseau RES est d'environ 8Mb/s et le débit d'encodage courant C1i@Nj des fragments reçus est de 5Mb/s. Le module de téléchargement d'image IMG dispose donc, en théorie, d'une bande passante restante de 3Mb/s.

Supposons également que le débit d'encodage seuil DEs est fixé à 4Mb/s, le client de téléchargement d'image IMG va donc fixer une qualité d'image inférieur ou égale à 2 Mb/s et ainsi allouer 3 Mb/s comme bande passante restante au module de téléchargement HAS du contenu télévisé.

En supposant que les deux qualités d'images disponibles sont associées à des débits de 2 Mb/s et 4 Mb/s, le client de téléchargement sélectionnera le débit de 2 Mb/s.

En variante, la donnée représentative d'un type d'image à télécharger peut aussi être définie grâce à des paramètres tels que la hauteur, la largeur, le taux de compression, etc., à charge pour le serveur de contenus SRV de fournir le contenu demandé avec les paramètres fournis.

Selon une dernière variante, la donnée liée au téléchargement du contenu principal est une valeur représentative du type de réseau de communication utilisé pour télécharger du contenu principal. Par exemple, si le réseau utilisé pour le téléchargement du contenu télévisé est un réseau performant en termes de débit, par exemple un réseau Fibre, la qualité choisie pour les images sera de préférence de bonne qualité. A l'inverse, si le réseau est moins performant comme par exemple le réseau ADSL, la qualité choisie sera moins bonne.

### ANNEXE 1 : exemple de fichier manifest

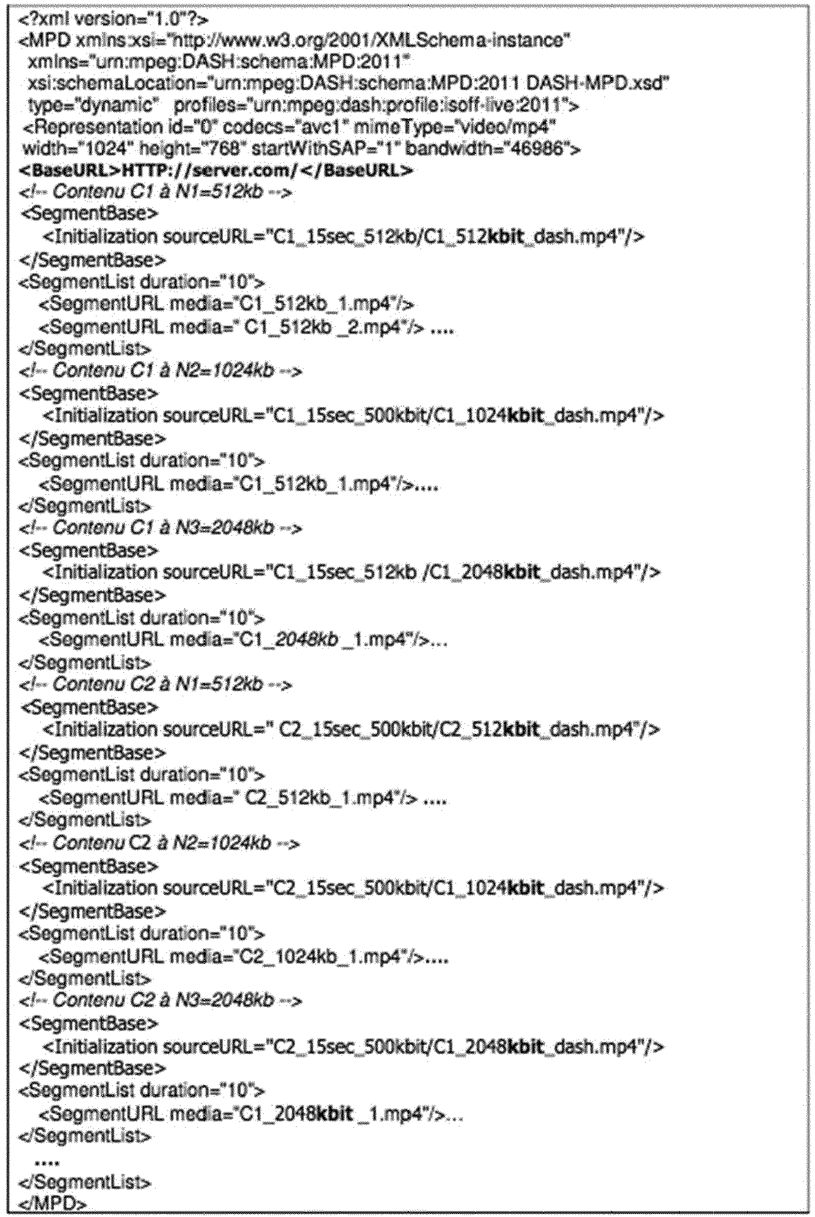

## Revendications

1. Procédé de gestion du téléchargement, dans un terminal lecteur, d'un contenu télévisuel, dit contenu principal, et d'une interface de navigation concomitamment depuis un réseau de télécommunications, l'interface de navigation comprenant des zones incluant des contenus représentatifs de contenus télévisuels en temps réel disponibles à la sélection, dits contenus secondaires, **caractérisé en ce qu'**il comprend les étapes suivantes dans le terminal lecteur de flux multimédia :
a. une étape de réception d'une commande d'affichage de l'interface de navigation,
b. une étape de transmission d'une requête d'accès à des contenus secondaires de l'interface, la requête incluant une donnée représentative d'un type de contenus secondaires à télécharger, le type choisi prenant en compte une donnée liée au téléchargement du contenu principal.

2. Procédé selon la revendication 1, **caractérisé en ce que** le contenu principal est téléchargé sous forme de fragments ayant des débits d'encodage variables dans le temps, et **en ce que** la donnée liée au téléchargement du contenu principal est une valeur du débit d'encodage utilisé pour le téléchargement.

3. Procédé selon la revendication 2, **caractérisé en ce que** la donnée comprend en outre une valeur seuil de débit d'encodage à ne pas franchir pour le téléchargement du contenu principal.

4. Procédé selon la revendication 1, **caractérisé en ce que** la donnée liée au téléchargement du contenu principal est un une valeur représentative du type de réseau de communication utilisé pour télécharger le contenu principal.

5. Procédé selon la revendication 1, **caractérisé en ce qu'**au type de contenu secondaire à utiliser correspond un débit d'encodage.

6. Procédé selon la revendication 2, **caractérisé en ce que** la donnée liée au téléchargement du contenu principal est un débit d'encodage d'une valeur choisie de telle manière que la somme du débit d'encodage demandé pour les contenus secondaires et du débit d'encodage courant utilisé pour le contenu principal est inférieure à une valeur de débit d'encodage maximum donné.

7. Entité de gestion (IMG) du téléchargement , dans un terminal lecteur, d'un contenu télévisuel, dit contenu principal, et d'une interface de navigation concomitamment depuis un réseau de télécommunications, l'interface de navigation comprenant des zones incluant des contenus représentatifs de contenus télévisuels en temps réel disponibles à la sélection, dits contenus secondaires, , **caractérisé en ce qu'**il comprend:
a. Un module de réception d'une commande d'affichage de l'interface de navigation,
b. Un module de transmission d'une requête d'accès à des contenus secondaires de l'interface, la requête incluant une donnée représentative d'un type de contenus secondaires à télécharger, le type choisi prenant en compte une donnée liée au téléchargement du contenu principal.

8. Terminal lecteur (CLTV) comprenant une entité de gestion telle que définie dans la revendication 7.

9. Programme d'ordinateur apte à être mis en œuvre sur une entité de gestion (MNG) telle que définie dans la revendication 7, le programme comprenant des instructions de code qui, lorsqu'il est exécuté par un processeur, réalise les étapes du procédé définies dans la revendication 1.

10. Support de données sur lequel a été mémorisée au moins une série d'instructions de code de programme pour l'exécution d'un procédé selon la revendication 1.
